# EUROPEAN PATENT SPECIFICATION

(11) **EP 2 943 422 B1**
(45) Date of publication and mention of the grant of the patent: **14.06.2017**
(21) Application number: 13703635.6
(22) Date of filing: 10.01.2013
(51) Int. Cl.: B65G 17/32, B65G 17/02

(54) **CARRIER PUCK**
TRÄGERSCHEIBE
PALET PORTEUR

(43) Date of publication of application: 18.11.2015
(73) Proprietor: CPK Midlands Limited, Birmingham, West Midlands B10 0HR (GB)
(72) Inventor: LUNN, John, Birmingham West Midlands B10 0HR (GB)
(74) Representative: Wilson, Alan Stuart
(86) International application number: PCT/GB2013/050033
(87) International publication number: WO 2014/108660

(56) References cited:
- EP-A1- 2 113 463
- WO-A1-03/091109
- WO-A1-2008/043394
- GB-A- 2 494 377
- US-A- 4 159 762
- US-A- 5 154 380
- US-A- 5 244 082
- US-A- 5 248 155
- US-A- 5 941 366
- US-A1- 2007 267 096

## Description

The present invention relates to carrier pucks, such as carrier pucks for receiving and supporting articles to be moved along a processing line.

A carrier puck may be used to receive and support an article, for instance a bottle, as it moves on a conveyor along a processing line, for instance an automatic or semiautomatic bottling line.

A conventional carrier puck may comprise a one-piece body with an aperture formed therein, the aperture being shaped and dimensioned to conform to the outer dimensions of a specific type of article which the carrier puck is designed to receive and support. For example, the aperture may have a circular cross section for receiving a cylindrical bottle.

Since the aperture of the conventional carrier puck is shaped and dimensioned for a specific type of article, each different type of article requires its own specifically designed carrier puck. Because a carrier puck cannot be reused for different types of article, there is significant wastage when a new type of article (e.g., of a new shape and/or size) is introduced. For instance if a new bottle with a square cross section replaces an existing cylindrical bottle, all of the carrier pucks used with the existing cylindrical bottles will become defunct and will likely be discarded.

Also, typically, the aperture of the conventional carrier puck is dimensioned for a loose fit of the article which the carrier puck is designed to receive and support, so that said article can be placed and removed easily. For example, the conventional carrier puck might include a cylindrical aperture with an inner diameter of 152 mm to accommodate a cylindrical bottle with an external diameter of 150 mm. Consequently, the conventional carrier puck neither supports the article in a particularly stable manner nor locates it particularly precisely. The document WO 2008/043 394 A1 discloses a carrier puck according to the preamble of claim 1. This puck is adapated to carry specimen containers of different sizes. There is however no control of the force exerted on the containers which might therefore be damaged under the holding pressure of the puck. In one aspect, the invention provides a carrier puck for an article of any one of a plurality of different sizes and/or shapes, comprising: a support for supporting the article thereon; and a plurality of locating members for locating the article between them on the support, wherein each of the locating members is pivotally connected to the support, a first one and a second one of the locating members are movable so as to reduce a separation distance between them and a third one and a fourth one of the locating members are movable so as to reduce a separation distance between them, a first coupling link arranged to couple together the first and second locating members so that displacement of one of them is proportional to displacement of the other; and a second coupling link arranged to couple together the third and fourth locating members so that displacement of the third locating member is proportional to displacement of the fourth locating member; a first linkage arranged such that actuation thereof causes each movable locating member to rotate; and respective clutches arranged to connect each of the movable locating members to the first linkage.

Optionally, the first and second locating members are pivotally connected to the support at respective positions which are equidistant from a centre of the receiving space.

Optionally, the third and fourth locating members are pivotally connected to the support at respective positions which are equidistant from a centre of the receiving space.

Optionally, the first linkage comprises a rectangular arrangement of four actuation links, the first locating member being connected to the third locating member and to the fourth locating member via first and second ones of the actuation links, respectively, and the second locating member being connected to the third locating member and to the fourth locating member via third and fourth ones of the actuation links, respectively.

The carrier puck may further comprise a second linkage, the second linkage comprising a coupling link arranged to couple together the first and second locating members so that displacement of the first locating member is proportional to displacement of the second locating member.

The second linkage may further comprise a second link, the second link being arranged to couple together the third and fourth locating members so that displacement of the third locating member is proportional to displacement of the fourth locating member.

In a second aspect, the invention provides a method of moving, along a processing line, an article of any one of a plurality of different sizes and/or shapes, comprising: providing, on a conveyor of the processing line, the carrier puck of the invention; placing the article on the support of the carrier puck; causing each movable locating member to move so as to reduce a separation distance between it and another one of the locating members; and advancing the conveyor to thereby move the article, supported by the puck, along the processing line.

The method may further comprise: actuating, via an actuation means of the processing line, the first linkage of the carrier puck in order to cause each movable locating member to move so as to reduce a separation distance between it and another one of the locating members.

The actuation means may comprise a pneumatic piston.

In a third aspect, the invention provides a processing line assembly comprising: two or more stations for processing articles; at least one of the carrier pucks; and a conveyor for transporting said at least one carrier puck between the stations.

The processing line may further comprise actuation means arranged to actuate the first linkage thereof in order to cause each movable locating member to move so as to reduce a separation distance between it and another one of the locating members.

The actuation means may comprise a pneumatic piston.

The puck, or the method, may further comprise any one or more features or steps of the preferred embodiments of the present invention which will now be described, by way of example only, with reference to the accompanying drawings of which:
**Figure 1** is an underneath view of a carrier puck in accordance with a first embodiment of the present invention, showing four locating members thereof when retracted;
**Figure 2** is an enlarged partial section through the carrier puck of Figure 1, along the line A-A, showing a shaft to which one of the locating members is connected; and
**Figure 3** is an underneath view of the carrier puck of Figures 1 and 2, showing the four locating members thereof when pivoted inwards.

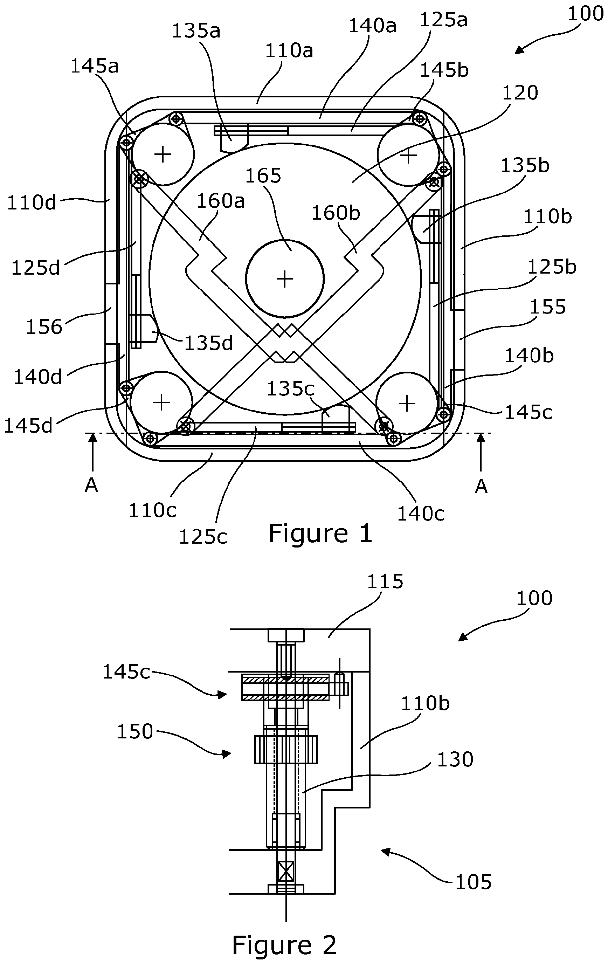

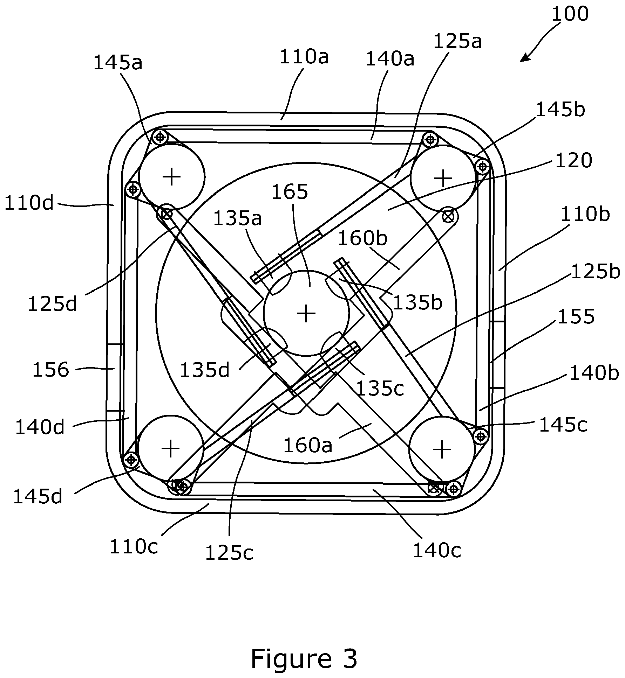

Referring mainly to Figures 1 and 3, in a first embodiment of the present invention there is a carrier puck 100 suitable for receiving and supporting an article of any one of a plurality of different sizes and/or shapes. For example, the carrier puck 100 may be used for supporting a bottle as it travels along a bottling line.

The carrier puck 100 comprises a flat, hollow, generally rectangular base 105 for supporting the article, four rectangular sidewalls 110a,b,c,d extending upwards therefrom and a flat, generally rectangular top cover 115 (see Figure 2) with a circular aperture 120 formed through it. Four arms 125a,b,c,d (other embodiments may include more or fewer arms), which act as locating members, are pivotally connected to the base 105. The four arms 125a,b,c,d can be used to locate and centre the article on the base 105.

Each of the arms 125a,b,c,d is mounted on a respective vertical shaft such that it can rotate about a vertical axis.

Referring briefly to Figure 2, each of the shafts is rotatably connected to the base 105 near a respective corner thereof. Each of the shafts is hollow and is connected to the base 105 by a respective pin which extends vertically upwards through the hollow centre of the shaft.

As shown in Figure 1, in a retracted orientation each of the arms 125a,b,c,d extends, from its respective shaft, in a direction approximately parallel to an adjacent side of the base 105. Accordingly, when retracted, the arms 125a,b,c,d bound an inner rectangular area on top of the base 105 for receiving the article.

Referring to Figures 1 and 3, a respective gripping jaw 135a,b,c,d is pivotally connected to the end of each arm, having a pivot axis which is substantially parallel to the longitudinal direction of the arm.

Each jaw 135a,b,c,d is elongate and has approximately twenty degrees of rotational travel about its pivot axis, centred at an upright orientation of the jaw 135a,b,c,d. In the upright orientation of the jaw 135a,b,c,d, the longitudinal direction of the jaw 135a,b,c,d extends in a direction approximately parallel to the pivot axis of the arm to which it is connected. In use, the jaws 135a,b,c,d will engage with the article in order to locate it on the base 105.

The carrier puck 100 comprises a first linkage by which the four arms 125a,b,c,d can be moved. The first linkage comprises four links 140a,b,c,d, each extending in a direction approximately parallel to an adjacent side of the base 105, so as to provide a generally rectangular arrangement of the links 140a,b,c,d.

Each of the links 140a,b,c,d is a flat elongate member pivotally connected at its ends to respective ones of the arms 125a,b,c,d, via respective crank mechanisms and clutches.

A respective crank 145a,b,c,d is coupled to each of the arms 125a,b,c,d, via a respective clutch 150 (see Figure 2). The pin which extends through the arm 125a,b,c,d, extends further upwards through the clutch 150 and then through the crank 145a,b,c,d. Each of the cranks 145a,b,c,d is pivotally connected to two of the links 140a,b,c,d, at respective connection points which are offset from the arm's vertical axis of rotation; the two links are angularly offset by ninety degrees.

Two of the links 140b,d, which extend in parallel directions, include outwardly projecting portions 155,156. The first linkage can be actuated via one of the outwardly projecting portions 155 in order to move the arms 125a,b,c,d in a first direction of rotation, into the inner rectangular region (as shown in Figure 3) so as to reduce a separation distance between the locating members, thereby to grip and centre the article on the base 105. The first linkage can be actuated via the other one of the outwardly projecting portions 156 in order to move the arms 125a,b,c,d in the opposite direction of rotation, out of the inner rectangular region and back towards the retracted orientations, so as to release the article.

As noted above, each of the arms 125a,b,c,d is rotatable by the linkage via a respective friction clutch 150. The friction clutches 150 provide torque control in order to prevent the arms 125a,b,c,d exerting too much force on the article as they move into the inner rectangular region to grip and centre the article on the base 105.

Since the friction clutches allow the arms 125a,b,c,d to slip relative to the first linkage, there is no need to take account of the size of the article when actuating the first linkage. That is, because of the friction clutches 150 the first linkage can be actuated through its full range of travel, in order to move the arms 125a,b,c,d into the inner rectangular region to grip and centre the article on the base 105, irrespective of the size of the article supported on the base 105 (e.g., the bigger the article, the more the arms 125a,b,c,d will slip relative to the first linkage).

Also, the clutches potentially allow each of the arms 125a,b,c,d to be in a different orientation, since the arms 125a,b,c,d can potentially slip by different amounts relative to the first linkage, thereby allowing different shapes of articles to be gripped by the arms 125a,b,c,d.

The carrier puck 100 comprises a second linkage for coupling the arms 125a,b,c,d together into diagonal pairs. Accordingly, when moved by the first linkage, both arms in a pair move in the same direction of rotation and by substantially the same amount. This can help centre the article at a centre point of the inner rectangular region. As will be appreciated from Figures 1 and 3, the arms 125a,b,c,d are pivotally connected to the base 105 at respective positions which are equidistant from the centre point.

The second linkage comprises two coupling links 160a,b, a respective one for each of the diagonal pairs of the arms 125a,b,c,d. Each of the coupling links 160a,b extends inside the base 105 and is pivotally connected at each of its ends via a respective upwardly extending pin to a respective one of the arms 125a,b,c,d in its pair. Since the second linkage couples the arms 125a,b,c,d together into pairs, rather than coupling all four arms together, the carrier puck 100 is able to centre irregularly shaped articles, such as oval bottles.

Each of the coupling links 160a,b is a flat elongate member which passes through opposite right angles such that it has a laterally offset middle portion. Accordingly, the coupling links do not obstruct a central aperture 165 through the base 105, through which a label can be applied, from below, to the bottom of the article in situ. This description elaborates on different carrier pucks not part of the claimed invention, as is presented in the following paragraphs. In one embodiment a carrier puck similar to that of the first embodiment has three arms, instead of four, which are pivotally connected to the base at respective points which form the corners of an equilateral triangle. In that embodiment, the first linkage comprises three links in a generally triangular arrangement. That embodiment may be more suitable than the first embodiment for supporting an article having a triangular or hexagonal shape, for example.

In some embodiments, only one of the arms is movable, in which case the movable arm can locate the article against a fixed locating member. The fixed locating member may be another arm, or may be some other part of the carrier puck such as an inner surface of a sidewall thereof.

In another aspect of the present invention, a carrier pack according to a preferred embodiment of the invention may be used in a processing line (not shown).

Accordingly, the invention provides a processing line assembly comprising a plurality of stations for processing articles. In one example, the articles are bottles and a first one of the stations is for filling the bottles, with a second one of the stations being for capping the bottles. There may be other stations, e.g. for applying labels to the bottles. The assembly includes at least one carrier puck 100 according to preferred embodiments of the invention, for supporting the bottles, and a conveyor for transporting the bottles, in the carrier pucks 100, between the stations.

Operation of the processing line assembly involves providing, on the conveyor, one of the carrier pucks 100. One of the bottles is then placed in the carrier puck 100, and the conveyor is advance until the bottle, in the carrier puck 100, reaches a station for locating and centring the bottle. The locating and centring station comprises a proximity sensor which detects the presence of the bottle, in the carrier puck 100, and halts the conveyor. The locating and centring station further comprises actuation means, which in this case includes a pneumatic cylinder, which is actuated in order to cause the, or each, movable locating member of the carrier puck 100 so as to reduce a separation distance between it and another one of the locating members, thereby to locating and centring the bottle. The conveyor is then advanced to move the bottle, supported by the puck, along the processing line to be processed at the next one of the stations.

## Claims

1. A carrier puck for an article of any one of a plurality of different sizes and/or shapes, comprising:
a support (105) for supporting the article thereon;
a plurality of locating members (125a, b, c, d) for locating the article between them on the support, each of the movable locating members being pivotally connected to the support, wherein a first one (125a) and a second one (125c) of the locating members are movable so as to reduce a separation distance between them, and a third one (125b) and a fourth one (125d) of the locating members are movable so as to reduce a separation distance between them,
a first coupling link (160b) arranged to couple together the first and second locating members so that displacement of one of them is proportional to displacement of the other; and a second coupling link (160a)arranged to couple together the third and fourth locating members so that displacement of the third locating member is proportional to displacement of the fourth locating member; and a first linkage (140a, b, c, d, 145a, b, c, d) arranged such that actuation thereof causes each of the movable locating members (125a, b, c, d) to rotate; the puck being **characterized in that** it comprises a respective clutch (150) arranged to connect each of the movable locating members (125a, b, c, d) to the first linkage (140a, b, c, d, 145a, b, c, d).

2. A carrier puck according to claim 2 in which, each of the first and second locating members (125a 125c) is movable towards the other of the first and second locating members.

3. A carrier puck according to claim 1 or claim 2, in which the first and second locating members (125a 125c) are pivotally connected to the support (105) at respective positions which are equidistant from a centre of the receiving space.

4. A carrier puck according to any preceding claim, in which the third and fourth locating members (125b 125d) are pivotally connected to the support (105)at respective positions which are equidistant from a centre of the receiving space.

5. A carrier puck according to any preceding claim in which the first linkage comprises a rectangular arrangement of four actuation links (140a, b, c, d), the first locating member being connected to the third locating member and to the fourth locating member via first and second ones of the actuation links, respectively, and the second locating member being connected to the third locating member and to the fourth locating member via third and fourth ones of the actuation links, respectively.

6. A method of moving, along a processing line, an article of any one of a plurality of different sizes and/or shapes, comprising:
providing, on a conveyor of the processing line, a carrier puck (100) according to any foregoing claim;
placing the article on the support of the carrier puck;
causing two of the movable locating members (125a, b, c, d) to move so as to reduce a separation distance between them; and
advancing the conveyor to thereby move the article, supported by the puck, along the processing line.

7. A method according to claim 6 in which said carrier puck (100) is a carrier puck according to claim 5, further comprising:
actuating, via an actuation means of the processing line, the first linkage (140a, b, c, d, 145a, b, c, d) of the carrier puck in order to cause each of the movable locating members (125a, b, c, d) to move so as to reduce a separation distance between it and another one of the locating members.

8. A method according to claim 7 in which the actuation means comprises a pneumatic piston.

9. A processing line assembly comprising: two or more stations for processing articles; at least one carrier puck (100) according to any of claims 1 to 5; and a conveyor for transporting said at least one carrier puck between the stations.

10. A processing line assembly according to claim 9, comprising at least one carrier puck (100) according to any one of claims 5 to 8 and comprising actuation means arranged to actuate the first linkage thereof in order to cause each of the movable locating members to move so as to reduce a separation distance between it and another one of the locating members (125a, b, c, d).

11. A processing line assembly according to claim 10 in which the actuation means comprises a pneumatic piston.

## Patentansprüche

1. Trägerscheibe für einen Artikel von einer Vielzahl von verschiedenen Größen und/oder Formen, aufweisend:
eine Halterung (105) um den Artikel daran zu halten;
einen Vielzahl von Positionierungselementen (125a, b, c, d) zum Positionieren des Artikels zwischen ihnen auf der Halterung, wobei jedes der beweglichen Positionierungselemente drehbar mit der Halterung verbunden ist, wobei ein erstes (125a) und ein zweites (125c) der Positionierungselemente beweglich sind, um einen Trennungsabstand zwischen ihnen zu reduzieren, und ein drittes (125b) und ein viertes (125d) der Positionierungselemente beweglich sind, um einen Trennungsabstand zwischen ihnen zu reduzieren,
ein erstes Koppelglied (160b), welches eingerichtet ist, um das erste und zweite Positionierungselement miteinander zu verbinden, so dass Verlagerung des einen von ihnen proportional zur Verlagerung des anderen ist; und ein zweites Koppelglied (160a), welches eingerichtet ist, um das dritte und vierte Positionierungselement miteinander zu verbinden, so dass Verlagerung des dritten Positionierungselements proportional zur Verlagerung des vierten Positionierungselements ist;
und ein erstes Gestänge (140a, b, c, d, 145a, b, c, d), welches eingerichtet ist, so dass dessen Betätigung jedes der Positionierungselemente (125a, b, c, d) dazu veranlasst, sich zu drehen;
wobei die Scheibe **dadurch gekennzeichnet ist, dass** sie eine jeweilige Kupplung (150) aufweist, welche eingerichtet ist, um jedes der beweglichen Positionierungselemente (125a, b, c, d) mit dem ersten Gestänge (140a, b, c, d, 145a, b, c, d) zu verbinden.

2. Trägerscheibe nach Anspruch 1, bei welcher sowohl das erste als auch das zweite Positionierungselement (125a, 125c) in Richtung auf das andere des ersten und des zweiten Positionierungselements bewegbar ist.

3. Trägerscheibe nach Anspruch 1 oder Anspruch 2, bei welcher das erste und zweite Positionierungselement (125a, 125c) mit der Halterung (105) an jeweiligen Positionen drehbar verbunden sind, welche gleichweit von einem Zentrum des aufnehmenden Raums entfernt sind.

4. Trägerscheibe nach einem der vorhergehenden Ansprüche, bei welcher das dritte und vierte Positionierungselement (125b, 125d) mit der Halterung (105) an jeweiligen Positionen drehbar verbunden sind, welche gleichweit von einem Zentrum des aufnehmenden Raums entfernt sind.

5. Trägerscheibe nach einem der vorhergehenden Ansprüche, bei welcher das erste Gestänge eine rechteckige Anordnung von vier Betätigungsgliedern (140a, b, c, d) aufweist, wobei das erste Positionierungselement mit dem dritten Positionierungselement und mit dem vierten Positionierungselement über das erste und zweite der Betätigungsglieder jeweils verbunden ist und das zweite Positionierungselement mit dem dritten Positionierungselement und mit dem vierten Positionierungselement über das dritte und vierte der Betätigungsglieder jeweils verbunden ist.

6. Verfahren zum Bewegen eines Artikel von einer Vielzahl von verschiedenen Größen und/oder Formen entlang einer Verarbeitungslinie, aufweisend:
Bereitstellen einer Trägerscheibe (100) nach einem der vorhergehenden Ansprüche auf einem Förderband der Verarbeitungslinie;
Anordnen des Artikels auf der Halterung der Trägerscheibe;
zwei der beweglichen Positionierungselemente (125a, b, c, d) dazu veranlassen, sich zu bewegen, um den Trennungsabstand zwischen ihnen zu reduzieren; und
Vorwärtsbewegen des Förderbands, um dadurch den Artikel, welcher durch die Scheibe gehalten wird, entlang der Verarbeitungslinie zu bewegen.

7. Verfahren nach Anspruch 6, bei welchem die Trägerscheibe (100) eine Trägerscheibe nach Anspruch 5 ist, weiter aufweisend: Betätigen des ersten Gestänges (140a, b, c, d, 145a, b, c, d) der Trägerscheibe über ein Betätigungsmittel der Verarbeitungslinie, um jedes der beweglichen Positionierungselemente (125a, b, c, d) zu veranlassen, sich zu bewegen, um einen Trennungsabstand zwischen ihm und einem anderen der Positionierungselemente zu reduzieren.

8. Verfahren nach Anspruch 7, bei welchem das Betätigungsmittel einen pneumatischen Kolben aufweist.

9. Anordnung einer Verarbeitungslinie, aufweisend: zwei oder mehr Stationen zum Verarbeiten von Artikeln; mindestens eine Trägerscheibe (100) nach einem der Ansprüche 1 bis 5; und ein Förderband zum Transportieren der mindestens einen Trägerscheibe zwischen den Stationen.

10. Anordnung einer Verarbeitungslinie nach Anspruch 9, aufweisend mindestens eine Trägerscheibe (100) nach einem der Ansprüche 5 bis 8 und aufweisend Betätigungsmittel, welche eingerichtet sind, um das erste Gestänge davon zu betätigen, um jedes der beweglichen Positionierungselemente zu veranlassen, sich zu bewegen, um einen Trennungsabstand zwischen ihm und einem anderen der Positionierungselemente (125a, b, c, d) zu reduzieren.

11. Anordnung einer Verarbeitungslinie nach Anspruch 10, bei welcher das Betätigungsmittel einen pneumatischen Kolben aufweist.

## Revendications

1. Palet porteur pour un article de l'une quelconque d'une multiplicité de tailles et/ou de formes, comprenant:
un support (105) pour supporter l'article sur celui-ci;
une multiplicité d'éléments de positionnement (125a, b, c, d) pour positionner les articles entre eux sur le support, chacun des éléments de positionnement mobiles étant connecté de façon pivotante au support, dans lequel un premier (125a) et un deuxième (125c) des éléments de positionnement sont mobiles de façon à réduire une distance de séparation entre eux, et un troisième (125b) et un quatrième (125d) des éléments de positionnement sont mobiles de façon à réduire une distance de séparation entre eux,
une première bielle de couplage (160b) agencée de façon à coupler l'un à l'autre les premier et deuxième éléments de positionnement de telle manière qu'un déplacement de l'un d'eux soit proportionnel à un déplacement de l'autre; et une deuxième bielle de couplage (160a) agencée de façon à coupler l'un à l'autre les troisième et quatrième éléments de positionnement de telle manière qu'un déplacement du troisième élément de positionnement soit proportionnel à un déplacement du quatrième élément de positionnement; et
une première liaison (140a, b, c, d, 145a, b, c, d) agencée de telle manière qu'un actionnement de celle-ci provoque la rotation de chacun des éléments de positionnement mobiles (125a, b, c, d);
le palet étant **caractérisé en ce qu'**il comprend un embrayage respectif (150) agencé de façon à connecter chacun des éléments de positionnement mobiles (125a, b, c, d) à la première liaison (140a, b, c, d, 145a, b, c, d).

2. Palet porteur selon la revendication 1, dans lequel chacun des premier et deuxième éléments de positionnement (125a, 125c) est mobile en direction de l'autre des premier et deuxième éléments de positionnement.

3. Palet porteur selon la revendication 1 ou la revendication 2, dans lequel les premier et deuxième éléments de positionnement (125a, 125c) sont connectés de façon pivotante au support (105) à des positions respectives qui sont équidistantes d'un centre de l'espace de réception.

4. Palet porteur selon l'une quelconque des revendications précédentes, dans lequel les troisième et quatrième éléments de positionnement (125b, 125d) sont connectés de façon pivotante au support (105) à des positions respectives qui sont équidistantes d'un centre de l'espace de réception.

5. Palet porteur selon l'une quelconque des revendications précédentes, dans lequel la première liaison comprend un agencement rectangulaire de quatre bielles d'actionnement (140a, b, c, d), le premier élément de positionnement étant connecté au troisième élément de positionnement et au quatrième élément de positionnement via une première et une deuxième des bielles d'actionnement, respectivement, et le deuxième élément de positionnement étant connecté au troisième élément de positionnement et au quatrième élément de positionnement via une troisième et une quatrième des bielles d'actionnement, respectivement.

6. Procédé pour déplacer, le long d'une ligne de traitement, un article de l'une quelconque d'une multiplicité de tailles et/ou de formes, comprenant les étapes suivantes:
préparer, sur un convoyeur de la ligne de traitement, un palet porteur (100) selon l'une quelconque des revendications précédentes;
placer l'article sur le support du palet porteur;
amener deux des éléments de positionnement mobiles (125a, b, c, d) à se déplacer de façon à réduire une distance de séparation entre eux; et
faire avancer le convoyeur afin de déplacer ainsi l'article, supporté par le palet, le long de la ligne de traitement.

7. Procédé selon la revendication 6, dans lequel ledit palet porteur (100) est un palet porteur selon la revendication 5, comprenant en outre l'étape suivante:
actionner, par l'intermédiaire d'un moyen d'actionnement de la ligne de traitement, la première liaison (140a, b, c, d, 145a, b, c, d) du palet porteur afin d'amener chacun des éléments de positionnement mobiles (125a, b, c, d) à se déplacer de façon à réduire une distance de séparation entre lui-même et un autre des éléments de positionnement.

8. Procédé selon la revendication 7, dans lequel le moyen d'actionnement comprend un piston pneumatique.

9. Ensemble de ligne de traitement comprenant: deux ou plusieurs stations pour le traitement d'articles; au moins un palet porteur (100) selon l'une quelconque des revendications 1 à 5; et un convoyeur pour transporter ledit au moins un palet porteur entre les stations.

10. Ensemble de ligne de traitement selon la revendication 9, comprenant au moins un palet porteur (100) selon l'une quelconque des revendications 5 à 8 et comprenant un moyen d'actionnement agencé pour actionner la première liaison de celui-ci afin d'amener chacun des éléments de positionnement mobiles à se déplacer de façon à réduire une distance de séparation entre lui-même et un autre des éléments de positionnement (125a, b, c, d).

11. Ensemble de ligne de traitement selon la revendication 10, dans lequel le moyen d'actionnement comprend un piston pneumatique.
